# EUROPÄISCHE PATENTSCHRIFT

(11) **EP 2 013 525 B1**
(45) Veröffentlichungstag und Bekanntmachung des Hinweises auf die Patenterteilung: **08.12.2010**
(21) Anmeldenummer: 07723486.2
(22) Anmeldetag: 22.03.2007
(51) Int. Cl.: F16L 37/088

(54) **FLUIDLEITUNGSKUPPLUNG**
FLUID LINE COUPLING
PROLONGATEUR HYDRAULIQUE

(30) Priorität: 26.04.2006 DE 102006019257
(43) Veröffentlichungstag der Anmeldung: 14.01.2009
(73) Patentinhaber: A. RAYMOND ET CIE, 38000 Grenoble (FR)
(72) Erfinder: MORETTI, Erminio, F-38000 Grenoble (FR); BOYER, Jacques, F-38410 St Martin d'Uriage (FR); RAYMOND, Albert, F-38640 Claix (FR)
(74) Vertreter: Rüttgers, Joachim
(86) Internationale Anmeldenummer: PCT/EP2007/002529
(87) Internationale Veröffentlichungsnummer: WO 2007/124818

(56) Entgegenhaltungen:
- EP-A1- 1 359 361
- WO-A-2005/116509
- DE-B3-102004 038 912
- DE-B3-102004 062 887
- DE-C1- 10 115 399
- DE-U1-202004 002 116
- US-A1- 2005 189 764
- US-A1- 2005 189 764
- US-A1- 2005 218 650

## Beschreibung

Die Erfindung betrifft eine Fluidleitungskupplung gemäß dem Oberbegriff des Patentanspruches 1.

Eine derartige Fluidleitungskupplung ist aus US 2005/0189764 A1 bekannt. Die vorbekannte Fluidleitungskupplung ist mit einem Aufnahmeteil zum Aufnehmen eines mit einen Stirnbund aufweisenden Einsteckteils und mit einer Fixieranordnung ausgestattet. Die Fixieranordnung verfügt über ein mit zwei Sicherungsarmen U-förmig ausgebildetes Sicherungsteil, das zwei einander gegenüberliegend angeordnete Sicherungsarme sowie einen sich zwischen den Sicherungsarmen erstreckenden biegsamen Deckabschnitt aufweist. Die Sicherungsarme sind von dem Deckabschnitt wegweisend aufeinander zu laufend ausgerichtet. Weiterhin ist die Fixieranordnung mit einem Rückhalteteil ausgebildet, das in einem Aufnahmeraum des Aufnahmeteils stationär in einer Umgreifstellung angeordnet ist und das zwei einander gegenüberliegende Rückhalteflügel aufweist. An den Rückhalteflügeln ist jeweils ein Rückhalteabschnitt ausgebildet, wobei jeder Rückhalteflügel mit einem Sicherungsarm des Sicherungsteils in Eingriff ist. Das Sicherungsteil ist in den Aufnahmeraum einsteckbar, rechtwinklig zu einer Einsteckrichtung des Einsteckteils zwischen einer ausgefahrenen Stellung und einer eingeschobenen Stellung bewegbar sowie verschiebbar mit dem Rückhalteteil verbunden. An dem Aufnahmeteil und an dem Sicherungsteil ist eine Sperranordnung ausgebildet, wobei an dem Aufnahmeteil und an dem Sicherungsteil ausgebildete Elemente der Sperranordnung bei einem nicht ordnungsgemäß in das Aufnahmeteil eingefügten Einsteckteil derart in Eingriff miteinander sind, dass das Sicherungsteil ausgehend von der ausgefahrenen Stellung am Überführen in die eingeschobene Stellung gehindert ist, wohingegen bei Anordnen des Stirnbundes eines Einsteckteils im Bereich der Sicherungsarme der Eingriff zwischen den Elementen der Sperranordnung gelöst und das Sicherungsteil in die eingeschobene Stellung bewegbar ist. In der eingeschobenen Stellung hintergreifen die Rückhalteabschnitte den Stirnbund. Bei der vorbekannten Fluidleitungskupplung ist zum Demontieren ein speziell ausgebildetes Demontagewerkzeug erforderlich.

Aus US 2005/0218650 A1 ist eine Fluidleitungskuppplung mit einem Sicherungsteil und mit einem Rückhalteteil bekannt, die zum Sichern eines mit einem Stirnbund ausgebildeten Einsteckteils von zwei einander gegenüberliegenden Seiten in ein Aufnahmeteil einfügbar sind.

Aus DE 101 15 399 C1 ist eine Fluidleitungskupplung mit einem ringartig geschlossenen Rückhalteteil und mit einem gegenüber dem Rückhalteteil verschiebbaren Sicherungsteil bekannt.

Aus WO 2005/116509 A1 ist eine Fluidleitungskupplung mit einem ringartig geschlossenen Rückhalteteil und mit einem zwei Sicherungsarme aufweisenden Sicherungsteil bekannt, das bei Passieren eines Stirnbundes eines Einsteckteils von einer ausgefahrenen Stellung in eine eingeschobene Stellung bewegbar ist.

Aus DE 10 2004 038 912 B3, DE 10 2004 062 887 B3, DE 20 2004 002 116 U1 und EP 1 359 361 A1 sind Fluidleitungskupplungen mit einem Aufnahmeteil und mit verschiebbaren Rückhalteteilen zum Sichern eines mit einem Stirnbund ausgebildeten Einsteckteils bebekannt.

Der Erfindung liegt die Aufgabe zugrunde, eine Fluidleitungskupplung der eingangs genannten Art anzugeben, die sich durch eine besonders einfache Handhabung sowie Herstellung auch zum Einsatz unter schwierigen Bedingungen beim Sichern eines Einsteckteiles in dem Aufnahmeteil, beim Überprüfen einer ordnungsgemäßen Anordnung eines Einsteckteiles in dem Aufnahmeteil sowie eine einfache Demontage eines Einsteckteiles auszeichnet.

Diese Aufgabe wird bei einer Fluidleitungskupplung der eingangs genannten Art erfindungsgemäß mit den kennzeichnenden Merkmalen des Patentanspruches 1 gelöst.

Dadurch, dass bei der erfindungsgemäßen Fluidleitungskupplung an jedem Rückhalteflügel eine Betätigungsstruktur zum Schwenken der Rückhalteflügel in radialer Richtung ausgebildet ist, lässt sich ein in die Fluidleitungskupplung eingefügtes Einsteckteil verhältnismäßig einfach demontieren.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: zeigt in einer perspektivischen Explosionsansicht ein Aus- führungsbeispiel einer erfindungsgemäßen Fluidlei- tungskupplung mit einer ein Rückhalteteil und ein Siche- rungsteil aufweisenden Fixieranordnung,
- Fig. 2: stellt im Querschnitt das Ausführungsbeispiel gemäß Fig. 1 im Bereich der Fixieranordnung beim Einführen eines Einsteckschaftes eines Einsteckteiles mit dem Sicherungs- teil in einer ausgefahrenen Stellung dar,
- Fig. 3: zeigt die Anordnung gemäß Fig. 2 mit einem an dem Ein- steckteil ausgebildeten Stirnbund in einer im Bereich der Fixieranordnung liegenden Position beim Einführen des Einsteckteiles,
- Fig. 4: ist ein Längsschnitt der Anordnung gemäß Fig. 3,
- Fig. 5: stellt die Anordnung gemäß Fig. 2 bis Fig. 5 unmittelbar nach Durchtritt des Stimbundes durch die Fixieranordnung dar,
- Fig. 6: ist ein Längsschnitt der Anordnung gemäß Fig. 5,
- Fig. 7: zeigt das Ausführungsbeispiel gemäß Fig. 1 bis Fig. 6 mit dem Sicherungsteil in einer eingeschobenen Stellung sowie mit einer elektrischen Messanordnung zum Erfassen der eingeschobenen Stellung des Sicherungsteiles,
- Fig. 8: stellt im Schnitt ein gegenüber dem Ausführungsbeispiel gemäß Fig. 1 bis Fig. 7 im Bereich des Aufnahmeteiles ab- gewandeltes Ausführungsbeispiel dar,
- Fig. 9: zeigt im Schnitt ein gegenüber dem Ausführungsbeispiel gemäß Fig. 1 bis Fig. 7 im Bereich des Sicherungsteiles abgewandeltes Ausführungsbeispiel und
- Fig. 10: stellt im Schnitt ein gegenüber dem Ausführungsbeispiel gemäß Fig. 1 bis Fig. 7 sowie dem Ausführungsbeispiel gemäß Fig. 9 im Bereich des Sicherungsteiles abgewandel- tes Ausführungsbeispiel dar.

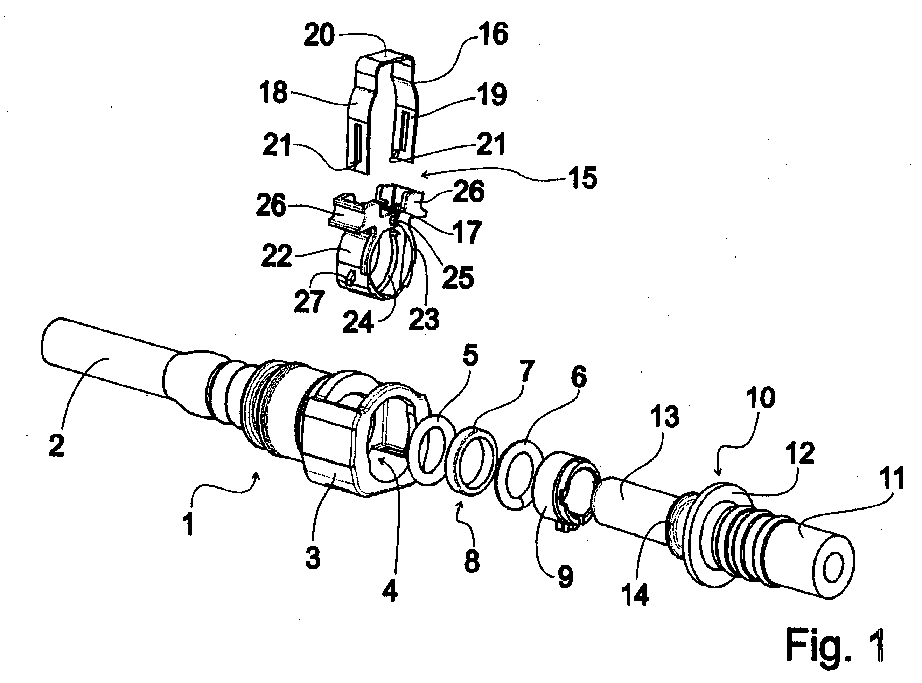

Fig. 1 zeigt in einer perspektivischen Explosionsansicht ein Ausführungsbeispiel einer erfindungsgemäßen Fluidleitungskupplung. Die erfindungsgemäße Fluidleitungskupplung verfügt über ein Aufnahmeteil 1, das an einem Ende wie in Fig. 1 dargestellt mit einem Ende einer Fluidleitung 2 dicht verbindbar ist. An dem anderen Ende weist das Aufnahmeteil 1 einen Sicherungskorpus 3 auf, der einen Aufnahmeraum 4 umgibt.

In das Aufnahmeteil 1 sind bei diesem Ausführungsbeispiel ein erster Dichtring 5, ein zweiter Dichtring 6 sowie ein zwischen den Dichtringen 5, 6 angeordneter Zwischenring 7 einer Dichtanordnung 8 durch den Aufnahmeraum 4 hindurch in einen der Fluidleitung 2 zugewandten Dichtraum einfügbar. Die Dichtanordnung 8 ist gegen den Aufnahmeraum 4 durch ein Distanzstück 9 abgeschlossen.

Weiterhin ist in Fig. 1 ein zum Einfügen in das Aufnahmeteil 1 vorgesehenes Einsteckteil 10 dargestellt, das mit einem länglichen Leitungsschaft 11 mit einem Ende einer weiteren, in Fig. 1 nicht dargestellten Fluidleitung verbindbar ist. In etwa in der Mitte des Einsteckteiles 10 ist ein umfänglich umlaufender Anschlagkragen 12 ausgebildet, der unter anderem als Anschlag für das Ende der Fluidleitung dient. Auf der dem Leitungsschaft 11 gegenüberliegenden Seite des Anschlagkragenes 12 ist ein länglicher, im wesentlichen zylinderförmiger Einsteckschaft 13 ausgebildet, der an seinem dem Anschlagkragen 12 benachbarten Endbereich einen umfänglich umlaufenden Stirnbund 14 aufweist, dessen Durchmesser kleiner als der Durchmesser des Anschlagkragenes 12 ist.

Die erfindungsgemäße Vorrichtung gemäß Fig. 1 verfügt weiterhin über eine in den Aufnahmeraum 4 einfügbare und bestimmungsgemäß dort angeordnete Fixieranordnung 15, die bei dem dargestellten Ausführungsbeispiel durch ein Sicherungsteil 16 und ein Rückhalteteil 17 gebildet ist.

Bei diesem Ausführungsbeispiel ist das Sicherungsteil 16 aus Metall, vorzugsweise aus einem gestanzten Blech, hergestellt und weist eine im wesentlichen U-förmige Gestalt mit zwei einander gegenüberliegenden Sicherungsarmen 18, 19 auf, die über einen flachen Deckabschnitt 20 miteinander verbunden sind. Dadurch verfügt das Sicherungsteil 16 über eine gewisse federnde Flexibilität und ist gegenüber hohen Temperaturen sehr beständig. Die Sicherungsarme 18, 19 sind in der von dem Deckabschnitt 20 wegweisenden Richtung aufeinander zu laufend ausgebildet, so dass sie bei einer im wesentlichen parallelen oder überweiten Anordnung gegeneinander vorgespannt sind. Weiterhin lässt sich Fig. 1 entnehmen, dass in den Sicherungsarmen 18, 19 in ihren von dem Deckabschnitt 20 abgewandten Enden Längsschlitze 21 als Ausnehmungen eingebracht sind.

Das Rückhalteteil 17 ist bei diesem Ausführungsbeispiel zweiteilig mit zwei separaten Rückhalteflügeln 22, 23 ausgebildet, die jeweils in etwa halbkreisförmig ausgebildet sind und an ihren aufeinander zu gewandten Innenseiten jeweils einen radial nach innen in etwa kreisbogenförmig vorstehenden, in der Einführrichtung des Einsteckteiles 10 angeschrägten Rückhalteabschnitt 24 tragen. Die Rückhalteflügel 22, 23 sind im Hinblick auf eine hohe Stabilität bei gleichzeitig hoher Beweglichkeit mit einem Ende über ein Gelenk 25 nach radial innen und außen schwenkbar miteinander verbunden, wobei benachbart des Gelenkes 25 jeder Rückhalteflügel 22, 23 eine Betätigungsstruktur 26 in Gestalt einer vorzugsweise mit Fingern gut greifbaren Höckeranordnung aufweist.

Schließlich verfügen die Rückhalteflügel 22, 23 an ihren radial außen liegenden Außenseiten jeweils über eine radial nach außen vorstehende und von dem Gelenk 25 wegweisend abgewinkelte Haltenase 27, die so dimensioniert sind, dass sie in die in den Sicherungsarmen 18, 19 ausgebildeten Längsschlitze 21 eingreifen, wenn bestimmungsgemäß das Sicherungsteil 16 mit seinen Sicherungsarmen 18, 19 durch zwischen dem Gelenk 25 und der Bestätigungsstruktur 25 eingebrachte Durchsteckausnehmungen durchgeführt worden ist und die Sicherungsarme 18, 19 radial außen an den Rückhalteflügeln 22, 23 anliegen. Dadurch sind das Sicherungsteil 16 und das Rückhalteteil 17 zuverlässig miteinander verbunden.

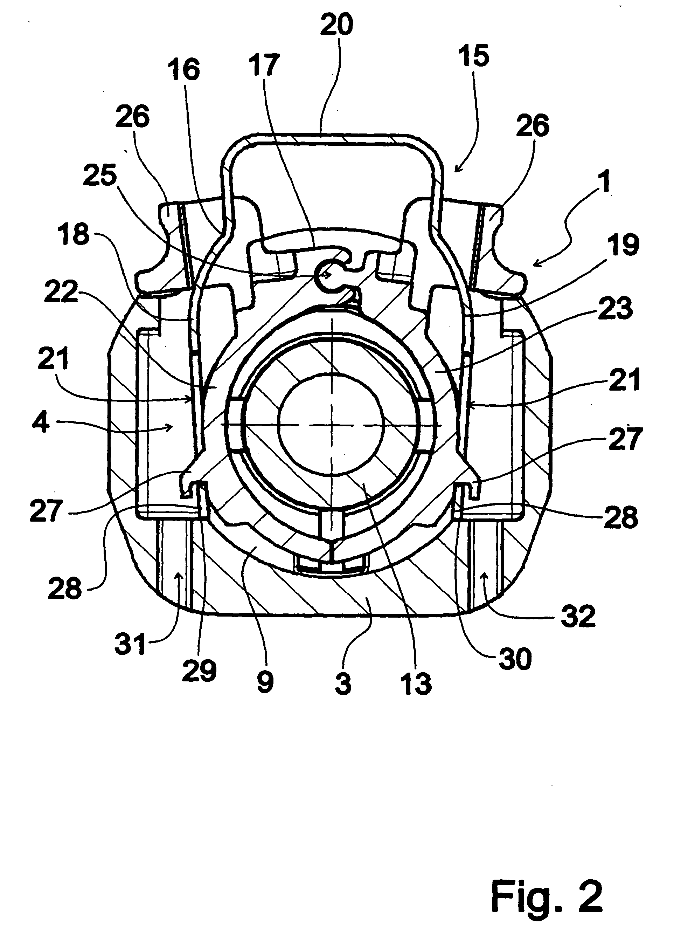

Fig. 2 stellt im Schnitt das Ausführungsbeispiel gemäß Fig. 1 im Bereich der Fixieranordnung 15 beim Einführen des Einsteckschaftes 13 des Einsteckteiles 10 mit dem Sicherungsteil 16 in einer ausgefahrenen Stellung dar. Der Außendurchmesser des Einsteckschaftes 13 ist wie aus Fig. 2 ersichtlich kleiner als der Innendurchmesser des durch die Rückhalteflügel 22, 23 gebildeten Ringes, der in dieser stationären Umgreifstellung des Rückhalteteiles 17 den Einsteckschaft 13 umschließt. Der Deckabschnitt 20 ist in der ausgefahrenen Stellung des Sicherungsteiles 16 in einem Abstand von dem Gelenk 25 angeordnet, und die dem Gelenk 25 gegenüberliegenden freien Enden der Rückhalteflügel 22, 23 liegen aufgrund der durch die vorgespannten Sicherungsarmen 18, 19 ausgeübten, radial nach innen wirkenden Vorspannkraft aneinander an.

In dieser Anordnung liegen die dem Deckabschnitt 20 abgewandten freien Enden 28 der Sicherungsarme 18, 19 als Elemente einer Sperranordnung an in Einsteckrichtung der Fixieranordnung 15 ausgerichteten Sperrflächen 29, 30, die zwischen dem Aufnahmeraum 4 und sich von dem Aufnahmeraum 4 in Einsteckrichtung der Fixieranordnung 15 fluchtend weg erstreckenden Eintauchkanäle 31, 32 als Eintauchräume ausgebildet sind, als weiteren Elementen der Sperranordnung an, so dass ein weiteres Verschieben des Sicherungsteiles 16 in Richtung der Mitte des Sicherungskorpus 3 blockiert ist.

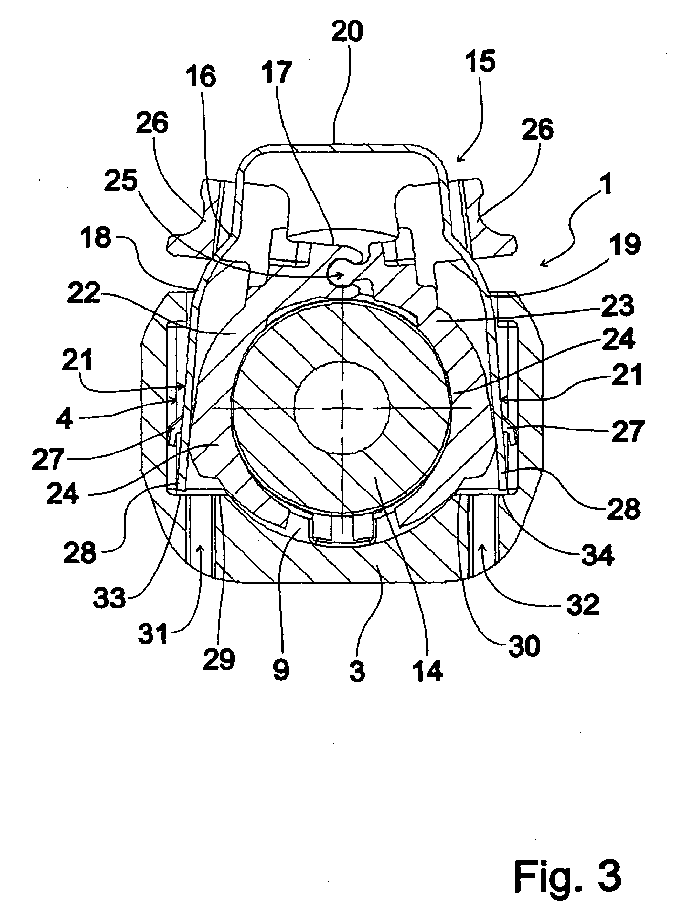

Fig. 3 zeigt die Anordnung gemäß Fig. 2 mit dem an dem Einsteckteil 10 ausgebildeten Stirnbund 14 in einer im Bereich der Fixieranordnung 15 liegenden Position beim Einführen des Einsteckteiles 10 in dem Moment, in dem durch Passieren des Stimbundes 14 in dem Bereich des durch die Rückhalteabschnitte 24 bedingten kleinsten Durchmessers der Rückhalteflügel 22, 23 die Rückhalteflügel 22, 23 in einer überweiten Stellung am weitesten beabstandet sind. In dieser Anordnung liegen die freien Enden 28 der Sicherungsarme 18, 19 nicht mehr an den Sperrflächen 29, 30 an, sondern sind in Einsteckrichtung des Sicherungsteiles 16 ausgerichteten Blockierflächen 33, 34 gegenüberliegend angeordnet, die radial außenseitig auf den Sperrflächen 29, 30 gegenüberliegenden Seiten der Eintauchkanäle 31, 32 ausgebildet sind, so dass ein Verschieben des Sicherungsteiles 16 von der ausgefahrenen Stellung in Richtung der Mitte des Aufnahmeraumes 4 weiterhin blockiert ist.

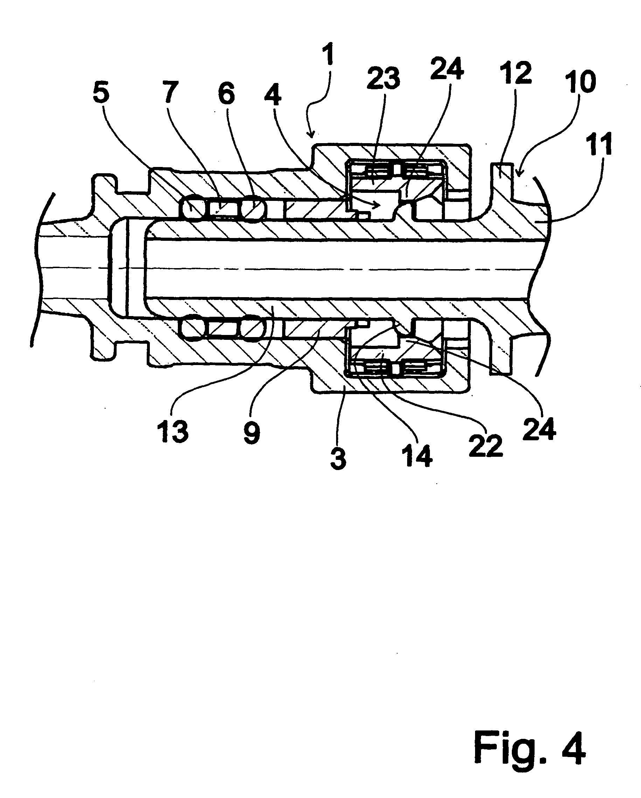

Fig. 4 ist ein Längsschnitt der Anordnung gemäß Fig. 3, aus dem deutlich erkennbar ist, dass bei Positionierung des Stimbundes 14 zwischen den in den Aufnahmeraum 4 radial nach innen einkragenden Rückhalteabschnitten 24 die Rückhalteflügel 22, 23 in die überweite Stellung gezwungen werden, so dass in dieser Übergangsphase trotz einer von außen nahezu ordnungsgemäß erscheinenden Anordnung des Einsteckteiles 10 in dem Aufnahmeteil 1 das durch jedoch weiterhin vorstehende und gegenüber Einschieben blockierte Sicherungsteil 16 deutlich erkennbar ist, dass die Rückhalteabschnitte 24 den Stirnbund 14 noch nicht hinterrastet haben.

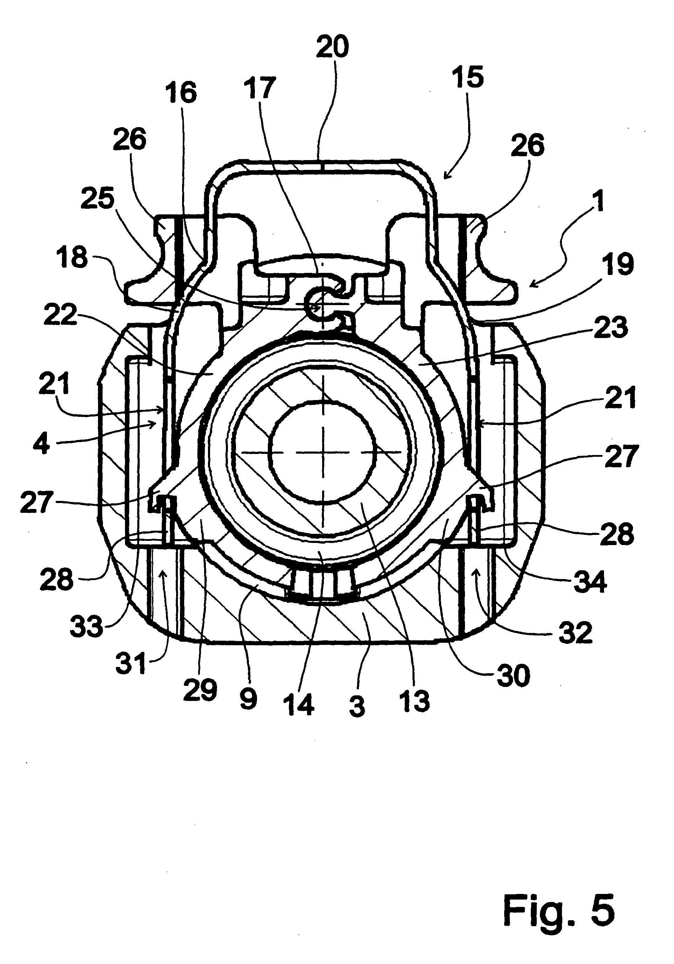

Fig. 5 stellt die Anordnung gemäß Fig. 2 bis Fig. 4 unmittelbar nach dem Durchtritt des Stimbundes 14 durch die Fixieranordnung 15 dar, in der die Sicherungsarme 18, 19 aufgrund entsprechender Dimensionierung des Stirnbundes 14 nunmehr fluchtend mit den Eintauchkanälen 31, 32 ausgerichtet sind. In dieser Anordnung ist das Sicherungsteil 16 durch Ausüben einer Kraft auf den Deckabschnitt 20 in Richtung der Mitte des Aufnahmeraumes 4 von der ausgefahrenen Stellung in eine eingeschobene Stellung überführbar.

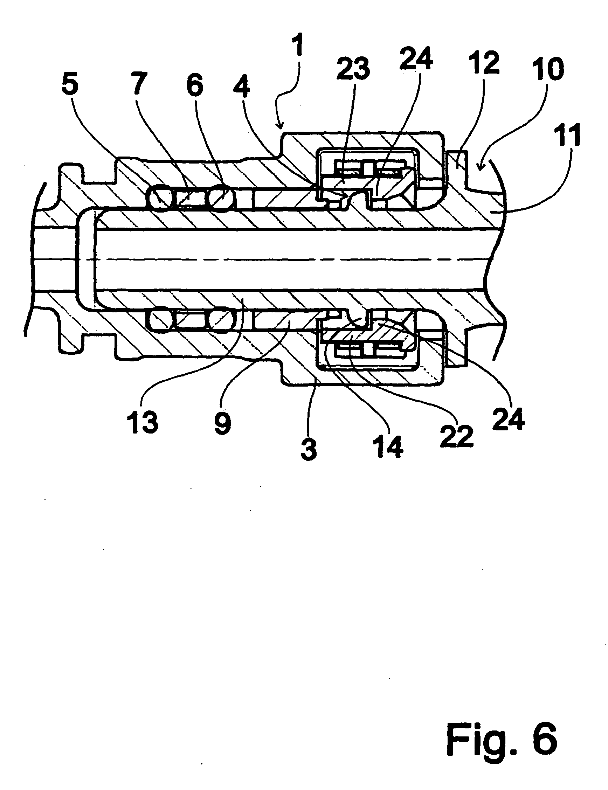

Fig. 6 ist ein Längsschnitt der Anordnung gemäß Fig. 5, der deutlich entnommen werden kann, dass nunmehr die Rückhalteabschnitte 24 den Stirnbund 14 hinterrasten und unter Anlage der in Einführrichtung des Einsteckteiles 10 rückseitig der Rückhalteabschnitte 24 liegenden Bereiche der Rückhalteflügel 22, 23 an dem Stirnbund 14 damit das Einsteckteil 10 in dem Aufnahmeteil 1 sichern, so dass nach Einschieben des Sicherungsteiles 16 der Verbindungsvorgang als ordnungsgemäß erkennbar abgeschlossen ist.

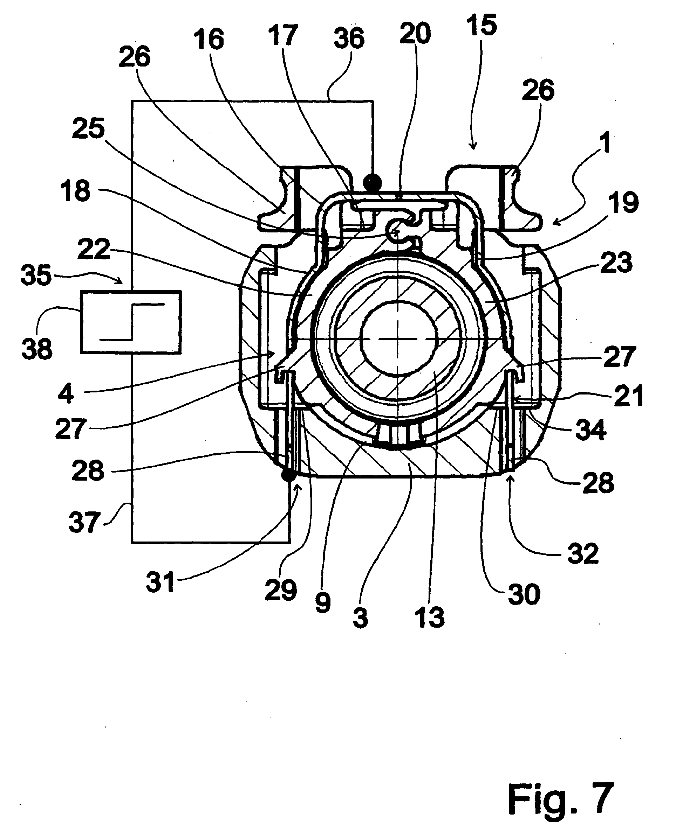

Fig. 7 zeigt die Anordnung gemäß Fig. 2 bis Fig. 6 mit dem Sicherungsteil 16 in der eingeschobenen Stellung, in der die Sicherungsarme 18, 19 in den Eintauchkanälen 31, 32 angeordnet sind und bis an die Außenseite des Sicherungskorpus 3 reichen. In dieser eingeschobenen Stellung des Sicherungsteiles 16 hintergreifen die Rückhalteabschnitte 24 der Rückhalteflügel 22, 23 unter radial nach innen gerichteter Vorspannung den Stirnbund 14, und das Einsteckteil 10 ist in dem Aufnahmeteil 1 gegen unbeabsichtigtes Herausziehen entgegen der Einführrichtung fixiert.

Weiterhin ist in Fig. 7 eine elektrische Messanordnung 35 zum Erfassen der eingeschobenen Stellung eines aus Metall oder einem anderen elektrisch leitfähigen Material hergestellten Sicherungsteiles 16 dargestellt, die im wesentlichen zwei Kontaktierleitungen 36, 37 aufweist, die jeweils mit einem Ende mit einer Auswerteeinrichtung 38 verbunden sind. Bei Kontaktieren des anderen freien Endes einer Kontaktierleitung 36 mit dem Deckabschnitt 20 des Sicherungsteiles 16 und Anordnen des freien Endes der anderen Kontaktierleitung 37 an der außenseitigen Mündungsstelle eines Eintauchkanales 31, 32 ergibt sich eine elektrische Verbindung zwischen den freien Enden der Kontaktierleitungen 36, 37, die zu einer in Fig. 7 anschaulich dargestellten Signaländerung bei der Auswerteeinrichtung 38 führt und somit für die eingeschobene Stellung des Sicherungsteiles 16 signifikant ist.

Um das Einsteckteil 10 in verhältnismäßig einfacher Art und Weise wieder freizugeben, sind nach Überführen des Sicherungsteiles 16 von der eingeschobenen Stellung in die ausgefahrene Stellung die Betätigungsstrukturen 26 mit Kräften zu beaufschlagen, die zu einem Schwenken der Rückhalteflügel 22, 23 radial nach außen bis in die überweite Stellung führen, so dass der Hintergriff der Rückhalteabschnitte 24 aufgehoben ist.

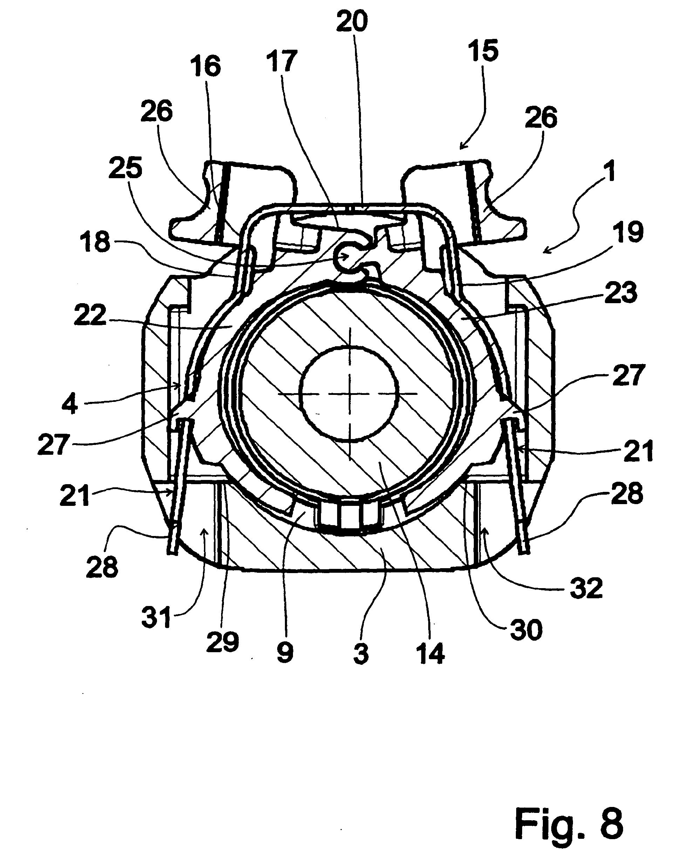

Fig. 8 zeigt ein gegenüber dem Ausführungsbeispiel gemäß Fig. 1 bis Fig. 7 abgewandeltes Ausführungsbeispiel in der Anordnung gemäß Fig. 3, bei dem die Eintauchkanäle 31, 32 unter Elimination der Blockierflächen 33, 34 als radial nach außen offene Eintauchräume ausgebildet sind, so dass das Sicherungsteil 16 bereits in der überweiten Stellung in die eingeschobene Stellung überführbar ist und weiterhin ein Entfernen des Einsteckteiles 10 durch Überführen der Rückhalteflügel 22, 23 in die überweite Stellung erreichbar ist, ohne dass das Sicherungsteil 16 von der eingeschobenen Stellung in die ausgefahrene Stellung verschoben werden muss.

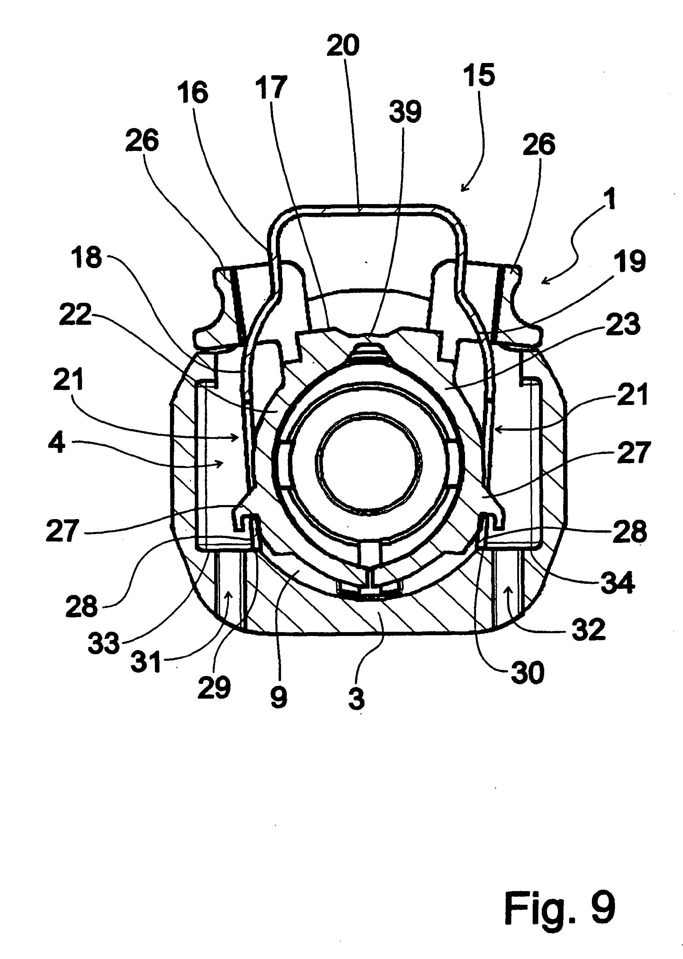

Fig. 9 stellt im Schnitt ein gegenüber dem Ausführungsbeispiel gemäß Fig. 1 bis Fig. 7 im Bereich des Rückhalteteiles 17 abgewandeltes Ausführungsbeispiel dar, bei dem das Rückhalteteil 17 einteilig mit über einen biegsamen, flexiblen Verbindungsabschnitt 39 ausgebildet ist, der nach Art eines Filmscharnieres die Rückhalteflügel 22, 23 schwenkbar miteinander verbindet. Dieses Ausführungsbeispiel zeichnet sich durch einen vorteilhaften einfachen Aufbau aus.

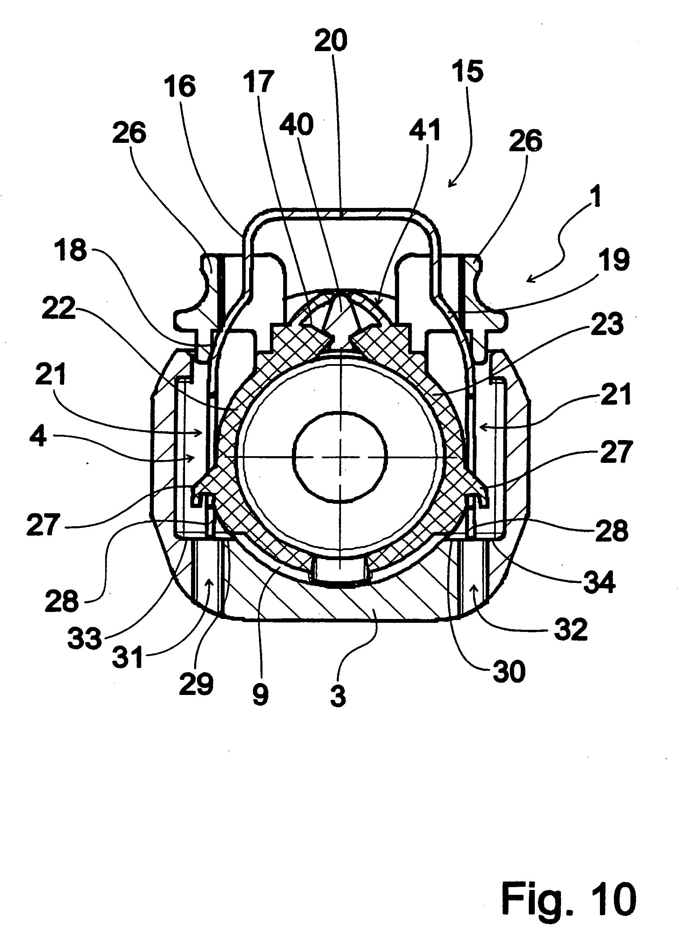

Fig. 10 stellt im Schnitt ein gegenüber dem Ausführungsbeispiel gemäß Fig. 1 bis Fig. 7 sowie gegenüber dem Ausführungsbeispiel gemäß Fig. 9 im Bereich des Rückhalteteiles 17 weiter abgewandeltes Ausführungsbeispiel dar. Bei dem Ausführungsbeispiel gemäß Fig. 10 ist ein an dem Sicherungskorpus 3 ausgebildeter Trenndom 40 vorhanden, der nach einem erstmaligen Einstecken des Rückhalteteiles 17 in den Aufnahmeraum 4 einen ursprünglich zwischen den Rückhalteflügeln 22, 23 ausgebildeten dünnen Brückenabschnitt 41 durchtrennt, so dass die Rückhalteflügel 22, 23 nunmehr nicht direkt, sondern über das Sicherungsteil 16 miteinander verbunden sind. Dies führt bei einem mechanisch einfachen Aufbau zu einer besonders leichten Aufinreitbarkeit beziehungsweise hohen Andruckkraft bei den Rückhalteflügeln 22, 23.

## Patentansprüche

1. Fluidleitungskupplung mit einem Aufnahmeteil (1) zum Aufnehmen eines mit einem Stirnbund (14) ausgebildeten Einsteckteiles (10) und mit einer Fixieranordnung (15), die ein mit zwei Sicherungsarmen (18, 19) U-förmig ausgebildetes Sicherungsteil (16) mit zwei einander gegenüberliegend angeordneten Sicherungsarmen (18, 19) sowie mit einem sich zwischen den Sicherungsarmen (18, 19) erstreckenden biegsamen Deckabschnitt (20), wobei die Sicherungsarme (18, 19) von dem Deckabschnitt (20) wegweisend aufeinander zu laufend ausgerichtet sind, und ein Rückhalteteil (17) aufweist, das in einem Aufnahmeraum (4) des Aufnahmeteiles (1) stationär in einer Umgreifstellung angeordnet ist und das zwei einander gegenüberliegende Rückhalteflügel (22, 23) aufweist, an denen jeweils ein Rückhalteabschnitt (24) ausgebildet ist, wobei jeder Rückhalteflügel (22, 23) mit einem Sicherungsarm (18, 19) des Sicherungsteiles (16) in Eingriff ist, wobei das Sicherungsteil (16) in den Aufnahmeraum (4) einsteckbar, rechtwinklig zu einer Einsteckrichtung des Einsteckteiles (10) zwischen einer ausgefahrenen Stellung und einer eingeschobenen Stellung bewegbar sowie verschiebbar mit dem Rückhalteteil (17) verbunden ist und wobei das Aufnahmeteil (1) sowie das Sicherungsteil (16) eine Sperranordnung aufweisen, wobei an dem Aufnahmeteil (1) und an dem Sicherungsteil (16) ausgebildete Elemente (28, 29, 30) der Sperranordnung bei einem nicht ordnungsgemäß in das Aufnahmeteil (1) eingefügten Einsteckteil (10) derart in Eingriff miteinander sind, dass das Sicherungsteil (16) ausgehend von der ausgefahrenen Stellung am Überführen in die eingeschobene Stellung behindert ist, und wobei bei Anordnen des Stirnbundes (14) eines Einsteckteiles (10) im Bereich der Sicherungsarme (18, 19) der Eingriff zwischen den Elementen (28, 29, 30) der Sperranordnung gelöst und das Sicherungsteil (16) in die eingeschobene Stellung bewegbar ist, wobei in der eingeschobenen Stellung die Rückhalteabschnitte (24) den Stirnbund (14) hintergreifen, **dadurch gekennzeichnet, dass** an jedem Rückhalteflügel (22, 23) eine Betätigungsstruktur (26) zum Schwenken der Rückhalteflügel (22, 23) in radialer Richtung ausgebildet ist.

2. Fluidleitungskupplung nach Anspruch 1, **dadurch gekennzeichnet, dass** das Rückhalteteil (17) einteilig ausgebildet ist, wobei die Rückhalteflügel (22, 23) über einen biegsamen Verbindungsabschnitt (39) miteinander verbunden sind.

3. Fluidleitungskupplung nach Anspruch 1, **dadurch gekennzeichnet, dass** das Rückhalteteil (17) zweiteilig ausgebildet ist, wobei jedes Teil einen Rückhalteflügel (22, 23) aufweist.

4. Fluidleitungskupplung nach Anspruch 3, **dadurch gekennzeichnet, dass** die Rückhalteflügel (22, 23) über ein Gelenk (25) miteinander verbunden sind

5. Fluidleitungskupplung nach Anspruch 3, **dadurch gekennzeichnet, dass** die Rückhalteflügel (22, 23) ausschließlich über das Sicherungsteil (16) miteinander verbunden sind.

6. Fluidleitungskupplung nach einem der Ansprüche 1 bis 5, **dadurch gekennzeichnet, dass** an jedem Rückhalteflügel (22, 23) ein radial nach außen vorstehender Vorsprung (27) und an jedem Sicherungsarm (18, 19) eine längliche Ausnehmung (21) ausgebildet ist, die mit einem Vorsprung (27) in Eingriff ist.

7. Fluidleitungskupplung nach einem der Ansprüche 1 bis 6, **dadurch gekennzeichnet, dass** das Sicherungsteil (16) aus Metall ist.

8. Fluidleitungskupplung nach einem der Ansprüche 1 bis 7, **dadurch gekennzeichnet, dass** die Sicherungsarme (18, 19) in der eingeschobenen Stellung jeweils in einen Eintauchraum (31, 32) eingreifen.

9. Fluidleitungskupplung nach einem der Ansprüche 1 bis 8, **dadurch gekennzeichnet, dass** der Deckabschnitt (20) sowie die von dem Deckabschnitt (20) abgewandten Enden (28) der Sicherungsarme (18, 19) in der eingeschobenen Stellung oder der ausgefahrenen Stellung des Sicherungsteiles (16) zur elektrischen Kontaktierung frei liegen.

## Claims

1. Fluid conduit coupling comprising a receptacle part (1) for receiving a plug-in part (10) having an abutting collar (14), and a fixing arrangement (15), which has a securing part (16) configured U-shaped with two securing arms (18, 19) which are arranged opposing one another and with a flexible cover section (20) extending between the securing arms (18, 19), wherein the securing arms (18, 19) are oriented running toward one another seen in a direction facing away from the cover section (20), said fixing arrangement comprising a retaining part (17), which is arranged static in a grasping position in a receptacle chamber (4) of the receptacle part (1), and which has two mutually opposed retaining wings (22, 23) on each of which a retaining section (24) is provided, wherein each retaining wing (22, 23) is in engagement with a securing arm (18, 19) of the securing part (16), wherein the securing part (16) can be inserted into the receptacle chamber (4) of the receptacle part (1), perpendicular to an inserting direction of the plug-in part (10), connected to the retaining part (17) movably and displaceably between a withdrawn position and an inserted position and wherein the receptacle part (1) and the securing part (16) have a locking arrangement wherein, with the plug-in part (10) not properly inserted into the receptacle part (1), elements (28, 29, 30) of the locking arrangement provided on the receptacle part (1) and on the securing part (16) are in engagement with one another such that, starting from the withdrawn position, the securing part (16) is prevented from transition into the inserted position, and wherein with the abutting collar (14) of a plug-in part (10) arranged in the region of the securing arms (18, 19), the engagement between the elements (28, 29, 30) of the locking arrangement is released and the securing part (16) is movable into the inserted position, wherein in the inserted position, the retaining sections (24) engage behind the abutting collar (14), **characterised in that** configured at each retaining wing (22, 23) is an actuating structure (26) for pivoting the retaining wings (22, 23) in the radial direction.

2. Fluid conduit coupling according to claim 1, **characterised in that** the retaining part (17) is configured in one piece, wherein the retaining wings (22, 23) are mutually connected via a flexible connecting section (39).

3. Fluid conduit coupling according to claim 1, **characterised in that** the retaining part (17) is configured in two parts, wherein each part has a retaining wing (22, 23) .

4. Fluid conduit coupling according to claim 3, **characterised in that** the retaining wings (22, 23) are mutually connected via a joint (25).

5. Fluid conduit coupling according to claim 3, **characterised in that** the retaining wings (22, 23) are mutually connected exclusively via the securing part (16).

6. Fluid conduit coupling according to one of the claims 1 to 5, **characterised in that** configured at each retaining wing (22, 23) is a radially outwardly extending projection (27) and configured at each securing arm (18, 19) is an elongate cut-out (21), which engages with a projection (27).

7. Fluid conduit coupling according to one of the claims 1 to 6, **characterised in that** the securing part (16) is made from metal.

8. Fluid conduit coupling according to one of the claims 1 to 7, **characterised in that**, in the inserted position, the securing arms (18, 19) each engage in an insertion chamber (31, 32).

9. Fluid conduit coupling according to one of the claims 1 to 8, **characterised in that**, in the inserted position or the withdrawn position of the securing part (16), the cover section (20) and the ends (28) of the securing arms (18, 19) facing away from the cover section (20) are free for electrical contacting.

## Revendications

1. Raccord pour conduite véhiculant un fluide, comprenant un élément femelle (1) destiné à recevoir un élément d'emmanchement mâle (10) muni d'une collerette (14) au niveau de sa partie antérieure et comprenant un agencement de maintien en position (15) qui est constitué par un organe de blocage en position en forme d'étrier (16) comportant deux pattes de blocage en position (18, 19), se composant de deux pattes de blocage en position (18, 19) respectivement diamétralement opposées ainsi que d'une portion supérieure flexible (20) qui s'étend entre les pattes de blocage en position (18, 19), les pattes de blocage en position (18, 19) étant en l'occurrence orientées, depuis la portion supérieure (20), en se rapprochant respectivement l'une de l'autre, et un organe de retenue (17), qui est disposé fixe dans le logement de réception (4) de l'élément femelle (1) dans une position où il exerce un effet de cramponnement périphérique et qui comporte deux segments de retenue (22, 23) diamétralement opposés qui comprennent respectivement une portion de retenue (24), dans lequel chaque segment de retenue (22, 23) est en prise d'engagement avec une patte de blocage en position (18, 19) de l'étrier de blocage en position (16), dans lequel l'étrier de blocage en position (16) est destiné à être inséré dans le logement de réception (4), est raccordé à l'organe de retenue (17) en pouvant être déplacé et coulisser perpendiculairement au sens de l'emmanchement de l'élément d'emmanchement mâle (10), entre une position de dégagement et une position d'insertion en prise d'accouplement, et dans lequel l'élément femelle (1) ainsi que l'étrier de blocage en position (16) comportent un dispositif de blocage en position, dans lequel des éléments (28, 29, 30) du dispositif de blocage en position dont sont munis l'élément femelle (1) et l'étrier de blocage en position (16) sont en l'occurrence, dans le cas où l'élément d'emmanchement mâle (10) n'aurait pas été correctement inséré dans l'élément femelle (1), en prise d'engagement réciproque dans des conditions telles qu'il est impossible de faire passer l'étrier de blocage en position (16) de sa position de dégagement à sa position d'insertion en prise, et dans lequel, lorsque la collerette antérieure (14) de l'élément d'emmanchement mâle (10) se trouve dans la zone correspondant aux pattes de blocage en position (18, 19), les éléments (28, 29, 30) du dispositif de blocage en position ne sont plus en prise d'engagement réciproque et l'étrier de blocage en position (16) peut être amené dans sa position d'insertion en prise, position d'insertion en prise dans laquelle les portions de retenue (24) viennent cramponner par derrière la collerette antérieure (14), **caractérisé en ce que** chaque segment de retenue (22, 23) comporte une structure d'actionnement (26) destinée à faire basculer les segments de retenue (22, 23) dans le plan radial.

2. Raccord pour conduite véhiculant un fluide selon la revendication 1, **caractérisé en ce que** l'organe de retenue (17) est réalisé dans une configuration monobloc, les segments de retenue (22, 23) étant en l'occurrence raccordés ensemble par une portion de liaison flexible (39).

3. Raccord pour conduite véhiculant un fluide selon la revendication 1, **caractérisé en ce que** l'organe de retenue (17) est réalisé en deux parties, chaque partie étant en l'occurrence munie d'un segment de retenue (22, 23).

4. Raccord pour conduite véhiculant un fluide selon la revendication 3, **caractérisé en ce que** les segments de retenue (22, 23) sont raccordés ensemble par l'intermédiaire d'une articulation (25).

5. Raccord pour conduite véhiculant un fluide selon la revendication 3, **caractérisé en ce que** les segments de retenue (22, 23) sont raccordés ensemble exclusivement par l'intermédiaire de l'étrier de blocage en position (16).

6. Raccord pour conduite véhiculant un fluide selon l'une des revendications 1 à 5, **caractérisé en ce que** chaque segment de retenue (22, 23) comporte une protubérance (27) faisant saillie vers l'extérieur dans le plan radial et **en ce que** chaque patte de blocage en position (18, 19) comporte un évidement oblong, qui est en prise d'engagement avec une protubérance (27).

7. Raccord pour conduite véhiculant un fluide selon l'une des revendications 1 à 6, **caractérisé en ce que** l'étrier de blocage en position (16) est réalisé dans un matériau métallique.

8. Raccord pour conduite véhiculant un fluide selon l'une des revendications 1 à 7, **caractérisé en ce que** les pattes de blocage en position (18, 19) viennent, dans leur position d'insertion en prise, respectivement s'accrocher dans un logement d'encastrement (31, 32).

9. Raccord pour conduite véhiculant un fluide selon l'une des revendications 1 à 8, **caractérisé en ce que** la portion supérieure (20) ainsi que les extrémités des pattes de blocage en position (18, 19) orientées à l'opposé de la portion supérieure (20) sont libres pour permettre la réalisation de contacts électriques aussi bien dans la position d'insertion en prise que dans la position de dégagement.
